# EUROPEAN PATENT APPLICATION

(11) **EP 2 966 587 A1**
(43) Date of publication of application: **13.01.2016**
(21) Application number: 14306138.0
(22) Date of filing: 11.07.2014
(51) Int. Cl.: G06F 21/54

(54) **Method of protecting software program by corrupting memory chunks, and device for implementing said method**

(71) Applicant: Thomson Licensing, 92130 Issy-les-Moulineaux (FR)
(72) Inventor: Salmon-Legagneur, Charles, 35576 Cesson-Sévigné (FR); Monsifrot, Antoine, 35576 Cesson-Sévigné (FR)
(74) Representative: Browaeys, Jean-Philippe

(57) **Abstract**

A method for corrupting a software program stored in a memory comprising at least one memory chunk containing a data used by the operating codes of this software program. Said method comprises the steps of calculating a corrupted value produced by an encryption routine using the data and a reference integrity value calculated from at least a portion of said software program, and a step of replacement of the content of said at least one memory chunk by the calculated corrupted value. Also disclosed is a method repairing a corrupted software program stored in a memory comprising at least one memory chunk containing a corrupted data used by the operating codes of this software program. Said method comprises a step of calling invocation points for calculating a repaired value produced by a decryption routine using the corrupted value read from said at least one memory chunk and a current integrity value calculated a portion of the software program, and a step of repairing the software program by writing the calculated repaired value in said at least one memory chunk. These two methods alternatively used allow to protect a software program.

## Description

### 1. FIELD OF THE INVENTION

The field of the present invention concerns the protection of software programs against attacks from hackers. More specifically, the invention relates to the case where the authenticity of a software program is protected by corruption and alteration functions.

### 2. PRIOR ART

Computer programs are under attack from "hackers" targeting either to discover a protected code, for example to make illegal copies, or to corrupt it, for example to damage computer systems. Known techniques are implemented to maintain the integrity of a program, and / or to encrypt a program so that it cannot be read and executed by unauthorized people and devices.

Different techniques are used to protect a software image from tampering attacks. The most common is to compute signatures, also called checksums, on pieces of code and to verify the signature after downloading or before execution. To increase the protection, a network of checksum protections may be used to make cross integrity checking on multiple ranges of code. The GuardIT product family is designed to protect code integrity, fortify license managed applications (desktop software), and secure gaming and digital media applications. With security protections embedded directly into the application, GuardIT protects the applications at run time from both static and dynamic attacks. Since detection is embedded into the application, protection is present independent of server, virtual machine, and mobile computing node location.

Although it permits to compute the integrity of the code, there are a number of significant deficiencies listed below :
- A checksum reference value must be embedded in the software image, and must be protected.
- The checksum verification routine itself can be bypassed, either by tampering its code or modifying the flow of instructions. It is particularly obvious, when there are only few checksum verifications routines, which makes a single point of failure.
- The document Wurster Glen Wurster, P. C. van Oorschot, Anil Somayaji. Titled "A generick attack on checksumming based software tamper resistance. In SP '05: Proceedings of the 2005 IEEE Symposium on Security and Privacy, pages 127-138, Washington, DC, USA, 2005. IEEE Computer Society, discloses the protection by modifying the TLB cache, to keep separate in memory the checked code, and the executed code. A translation lookaside buffer (TLB) is a cache that memory management hardware uses to improve virtual address translation speed. All current desktop, laptop, and server processors include one or more TLBs in the memory management hardware, and it is nearly always present in any hardware that utilizes paged or segmented virtual memory. The document discloses an attack able to avoid the integrity control, but no solution to secure this kind of attack.
- The checksum checks may be stripped from the image (so called NOP attack), to produce a second image, fully functional and completely unprotected.

Another solution to protect a software image consists in making it resilient to tampering. Some pieces of code are corrupted or encrypted, and are dynamically repaired at execution time by repair guards. Usually, the routine modifying the code needs to have Read/Write access to memory pages, and the underlying operating system API can be very rapidly found in the binary. Once the hacker has reversed the repairing routine, he can build a second valid image, with all the corrupted chunks of code repaired.

Another attack consists in waiting until the code has been repaired in the memory. This is done when the program is downloaded from a hard disk and stored in a working memory. Before its running, the program is repaired. At this moment, a hacker may capture the repaired image. That is the usual way how unpack tools work. In the field of mobiles devices, like Android or iOS smartphones, these devices can be rooted (or jailbroken) so the integrity of running applications on such devices is not guaranteed. To protect an application, an authenticity mechanism, embedded in the application and not depending on the compromised OS is mandatory. Integrity checks are candidates but are easily detectable, as it still reveals to the hacker the expected integrity value. By studying them, a hacker may retrieve information, and reproduce a valid and unauthorized image.

Integrity checks and repairing guards are known techniques. A person skilled in the art knows how to combine them to make it more robust. For example: repairing the checksum reference value, having a second integrity check on the integrity check routine, etc. But known software protection processes are very time-consuming while providing relatively small advantages, and they are not generic. A hacker having enough time to analyze the data may bypass these protections.

At the time being, the known software protections are either easy to detect and circumvent, or complex to implement. There is therefore a need for an enhanced integrity check that reveals nothing to the attacker, or at least nothing helpful. There is also a need for a more secure integrity check mechanism, atomic and self-sufficient, that fundamentally does not expose any secret and does not have a single point of failure.

### 3. SUMMARY

In a first aspect, the disclosure is directed to method for protecting a software program stored in a memory comprising at least one memory chunk containing data used by operating codes of the software program. An electronic device calculates a corrupted value produced by an encryption routine using the data and a reference integrity value calculated from at least a portion of said software program not comprising said at least one memory chunk, and replaces the content of said at least one memory chunk by the calculated corrupted value.

Various embodiments of the first aspect include:
That the software program comprises at least a first zone containing operating codes and a second zone containing data associated with these codes, the first zone being used for the calculating of the reference and current integrity values of software program, the second zone containing the memory chunk,
That the data contained in memory chunk is an opaque predicate,
That the data contained in memory chunk is at least a pointer of the virtual Function Tables pointers,
That the encryption routine is the XOR function, and
That the reference and current integrity values are calculated by using a HASH function.

In a second aspect, the disclosure is directed to a method for repairing a software program stored in a memory comprising at least one memory chunk containing a data used by the operating codes of the software program, wherein at least one memory chunk of the software program contains a corrupted value. An electronic device calls an invocation point for calculating a repaired value produced by a decryption routine using the corrupted value read from the at least one memory chunk and a current integrity value calculated over a portion of the software program not comprising the at least one memory chunk, and repairs the software program by replacing the corrupted value by the calculated repaired value in the at least one memory chunk.

In a third aspect, the disclosure is directed to a computer program product comprising program code instructions for implementing the method according to the second aspect, when the program code is executed by a processing unit.

In a fourth aspect, the disclosure is directed to a non-transitory computer-readable carrier medium storing a program that, when executed by a processing unit, performs the method according to the second aspect.

In a fifth aspect, the disclosure is directed to a device comprising a central unit and a program memory, the program memory being configured to store a software program comprising at least one memory chunk containing data used by operating codes of the software program, the central unit being configured to calculate a corrupted value produced by an encryption routine using the data and a reference integrity value calculated from at least a portion of the software program not comprising said at least one memory chunk, and replace the content of the at least one memory chunk by the calculated corrupted value.

In a sixth aspect, the disclosure is directed to a device comprising a central unit and a program memory, said program memory being configured to store a software program comprising at least one memory chunk containing data used by the operating codes of this software program, wherein the at least one memory chunk of said software program comprises a corrupted value, wherein the central unit is configured to call an invocation point for calculating a repaired value produced by a decryption routine using the corrupted value read from the at least one memory chunk and a current integrity value calculated over a portion of the software program not comprising the at least one memory chunk, and repair the software program by replacing the corrupted value by the calculated repaired value in the at least one memory chunk.

In an embodiment of the sixth aspect, the central unit is further configured to calculate a corrupted value produced by an encryption routine using the repaired value and a reference integrity value calculated from at least a portion of the software program not comprising said at least one memory chunk, and replace the content of said at least one memory chunk by the calculated corrupted value.

### 4. LIST OF FIGURES

Other characteristics and advantages will now become apparent with more details within the framework of the description, which follows of exemplary embodiments given by way of illustration while referring to the appended figures of which:
- Figure 1 illustrates the main elements of a device configured to perform the method of protecting a software program according to a preferred embodiment of the invention,
- Figure 2 illustrates an exemplary flowchart of the main steps performed for protecting a software program,
- Figure 3 illustrates another exemplary flowchart of the main steps performed for protecting a software program,
- Figures 4.a, 4.b and 4.c illustrate mappings at different times of a software program protected by the method according to an embodiment.

### 5. DESCRIPTION OF A EMBODIMENTS

### 5.1 General principle

The disclosure concerns a method for protecting a software program stored in a memory comprising at least one memory chunk containing data used by the operating codes of this software program. Said method comprises calculating a corrupted value produced by an encryption routine using the data and a reference integrity value calculated from at least a portion of said software program, and a step of replacement of the content of said at least one memory chunk by the calculated corrupted value. The disclosure concerns also a method for repairing a corrupted software program stored in a memory comprising at least one memory chunk containing corrupted data used by the operating codes of this software program. Said method comprises calling invocation points for calculating a repaired value produced by a decryption routine using the corrupted value read from said at least one memory chunk and a current integrity value calculated over a portion of the software program, and a step of repairing the software program by writing the calculated repaired value in said at least one memory chunk. These two methods alternatively used allow to protect a software program.

### 5.2 General description of an embodiment

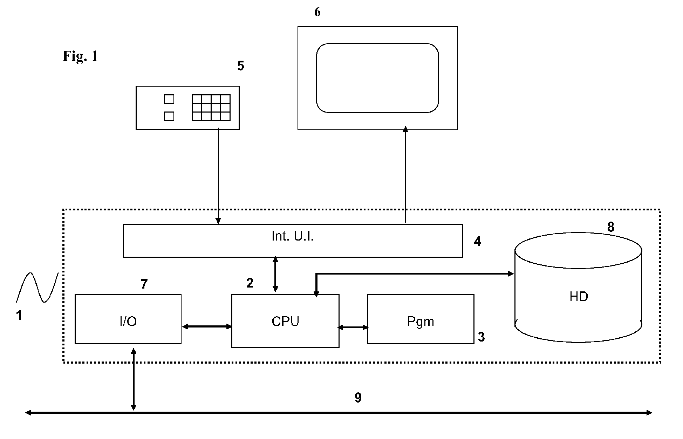

First, using Fig. 1, the main elements for implementing the method according to an embodiment are shown. According to this example, a terminal 1, for example a personal computer or a communication device such as a smartphone, comprises a central processing unit 2 connected to a program memory 3, an interface 4 allowing interaction with a user via a keyboard 5 and possibly a mouse, and a screen 6. Terminal 1 has also an Input/Output interface 7 for communication with a digital network 9. The communication may be wireless, through a GSM (Global System Mobile) for example. The terminal may also comprise a mass memory 8, for example in the form of a hard disk, allowing a great storage capacity. The central processing unit 2 is configured to calculate integrity values and possibly compress and decompress software programs.

The program memory 3 contains at least a protection module. The protection module is either resident in the program memory 3 of the terminal 1, or downloaded and stored in a writable memory of the terminal 1.

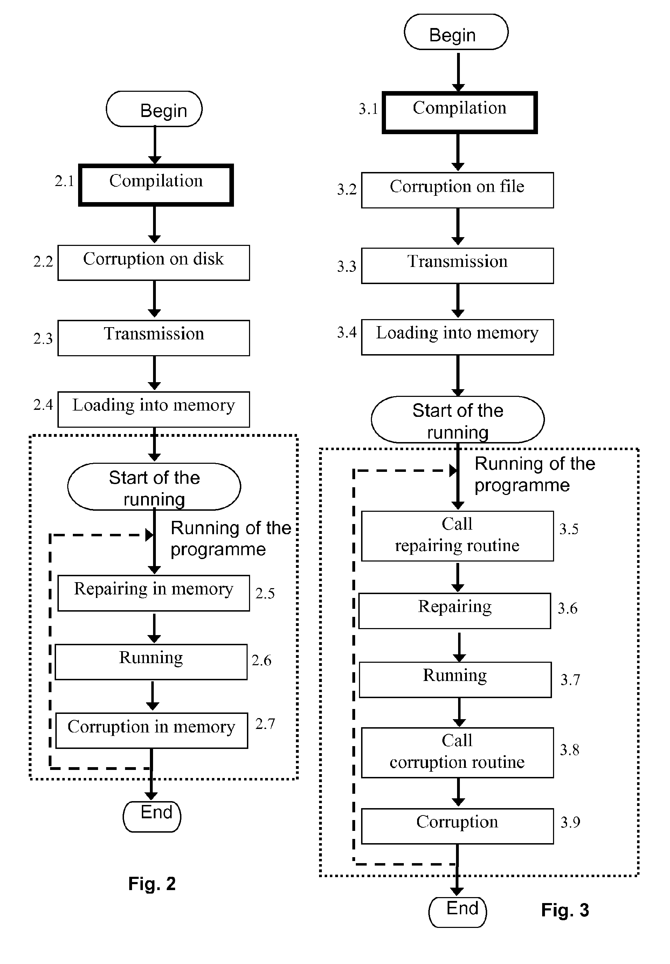

An example of a flowchart with steps for protecting a software program is illustrated in **Fig. 2****.** The term "software program" means an executable program comprising a series of operating codes associated with constant values. An operating code is a code defining a function executable by the central unit, for example: STORE, ADD, ... A constant value is a parameter (number, string, ...) associated with this function, for example a address value (STORE at 0100H) or a constant (ADD 8000H : addition of 8000H to the value in a register).

The steps of the flowchart of the **Fig. 2** form two parts, the first allows to protecting the software program by corruption, the second allows to repair it before execution.

In step 2.1, a software program is compiled from a source program. This program can be written in C + + or any other algorithmic evolved language. Then, it is stored on a disk, or other support medium such as a CD, a DVD, a magnetic tape, etc. Just after, to be protected, the compiled software program is corrupted (step 2.2). The corruption routine comprises a plurality of sub-steps. First, a reference integrity value is calculated by using a portion or all of the operating code values of the software program read from the program memory 3. The calculation of the reference integrity value is carried out by using the values of each memory chunk and a hash algorithm to produce a hash value. A part of the software program is defined by a first and last address of operating codes, several parts may be combined to define the zone for the calculating of the integrity value. All the values at the memory chunk defined by these address are read and used by the hash algorithm.

Then a corrupted value is calculated by a symmetrical encryption routine contained in the protection module. The calculation takes into account the content of the memory chunk to corrupt and the reference integrity value. According to one embodiment, the corrupted value is produced by a XOR function between the content of the memory chunk and the reference integrity value. The corrupted value is written into the memory chunk instead of the repaired value and the software program is protected. This corruption modifies only the contents of one or more memory chunks identified by their addresses. In step 2.3, the protected software program is transmitted to a terminal by the digital network 9 for example, and in step 2.4 loaded in the mass memory 8 of this terminal.

At this time, the software program stored in the mass memory 8 is protected. If a hacker reads the memory content, then he retrieves the content of each memory chunk, but this content is not usable because it is corrupted. When a user wants to execute the software program stored in the terminal 1, the program must be repaired and restored to the correct value.

When the user of the terminal wants to execute the software program, or at least a part of the software program, it is read from the mass memory and stored in the program memory 3. If the program is marked as being protected, then the protection module is launched. The list of corrupted memory chunks is stored in the module protection under the form of address array. When the software program reaches an operating code identified in the list, an integrity check routine is launched. At first, the integrity check routine calculates a second integrity value, also named "current integrity value", by using the operating code values of a portion or all of the software program recorded in the memory 3 and the same hash algorithm as that of step 2.2. We can note that no corrupted memory chunk value is used to calculate the current integrity value. If the software program does not change, the reference integrity value is equal to the current integrity value.

Then, the integrity check calculates a repaired value. The calculation of the restored value is performed using a decryption routine that is symmetrical to the encryption routine of step 2.2. The content of the memory chunk and the current integrity value are used for entry to the decryption routine to produce a repaired value. In the end of step 2.5, the repaired value is written into the memory chunk instead of the corrupted value and operating code may be executed.

In step 2.6, the operating code using the content of the repaired memory chunk is executed. After its execution, the operating code is preferably protected again. To do that, a step of corruption is launched on this operating code. A new corrupted value is calculated by using the current integrity value calculated in step 2.5. The calculation of the corrupted value is performed by the same encryption routine as step 2.2. The calculation takes into account the content of the memory chunk and the initial integrity value. It is not essential that the encryption and decryption key be secret, it is sufficient that the addresses of memory chunks to be protected remains secret. In step 2.7, the corrupted value is written into the memory chunk instead of the repaired value and the software program is protected again.

The steps 2.5, 2.6 and 2.7 are repeated for each memory chunk protected by corruption, as shown by the dotted arrow of **Fig. 2****.**

If the operating code value written in step 2.7 is the same as read in step 2.5, i.e. if the program has not been fraudulently modified, the repaired software program will be equal to the initial software program. This embodiment shown by **Fig. 2** allows to protect a software program during before and during its running.

The **Fig. 3** shows a variant of the present invention consisting in protecting the software program by set of operating codes.

The first steps 3.1 to 3.4 are very similar to the steps 2.1 to 2.4. In step 3.2, the software program is divided in a plurality of set of operating codes. Each set executes a determined function, and independently runs to another set.

A plurality of initial integrity values are calculated by using a portion or all of the operating code values of each set of the software program. The calculation of each initial integrity value is carried on by using the values of each memory chunk and a hash algorithm producing a hash value. We can note that no corrupted memory chunk value is used to calculate the initial integrity value. Then, a corrupted data is calculated for each memory chunk to be protected in each software program set. The calculation of the corrupted value is performed by a symmetrical encryption routine contained in the protection module. The calculation takes into account the content of the memory chunk and the initial integrity value corresponding to the set of operating codes. It is not essential that the encryption and decryption key be secret, it is sufficient that the addresses of memory chunks to be protected remains secret. The corrupted value may be produced by a XOR function between the content of the memory chunk and the initial integrity value. At the end of step 3.2, memory chunks in each set of operating codes are corrupted and all the sets of the software program are protected.

A specific repairing routine and a corruption routine protect each set of program. These two routines are associated and contain a common list of corrupted memory chunks. The software program comprises routine calls at entry point beginning the running of the associated set of operating codes.

In step 3.4, the program memory of the terminal contains a protected software program. At a certain time, the user launches the software program. If the content of memory program 3 is launched without the preliminary execution of integrity check routine, then certain operating code will not correctly execute and thus, software program behavior will be different and may be stopped in error. In step 3.5, the first repairing routine is called to restore the values of set of operating codes 1 to run. This routine calculates a current integrity value of set 1 by using the operating code values of a portion or all of the software program of set 1 and the same hash algorithm as that of step 3.2. The integrity check routine reads the list of corrupted memory chunks and extracts their current contents. Then, a repaired value is calculated for each memory chunk of set 1 identified by the list. The calculation of the restored value is performed using a decryption routine that is symmetrical to the encryption routine. The decryption routine uses the content of the memory chunk and the current integrity value of set 1 to produce a repaired value. The calculated value is written into the memory chunk instead of the corrupted value. This last step is repeated for each memory chunk of set 1 which is protected by corruption.

At the end of step 3.6, the set of operating codes 1 is fully restored. Then the set 1 may be executed in step 3.7 without calling other repairing or corruption routines.

At the end of the running of a set of operating codes and before to launch another set, it is preferred to protect the set again. To do that, in step 3.8, the first corruption routine is called to corrupt the value of set 1. In step 3.9, the value identified in the list of corrupted memory chunks of set 1 are corrupted with the same manner as step 3.2. The current integrity value of set 1 are now used.

The software program execution continues on the next set, set 2 for example, this other set must then be repaired. To do that, the program loops to the step 3.5 such as shown by the dotted arrow of Fig. 3. With this manner, the software program are protected by sets. When a set starts to run, it is repaired and at the end of its running, it is corrupted.

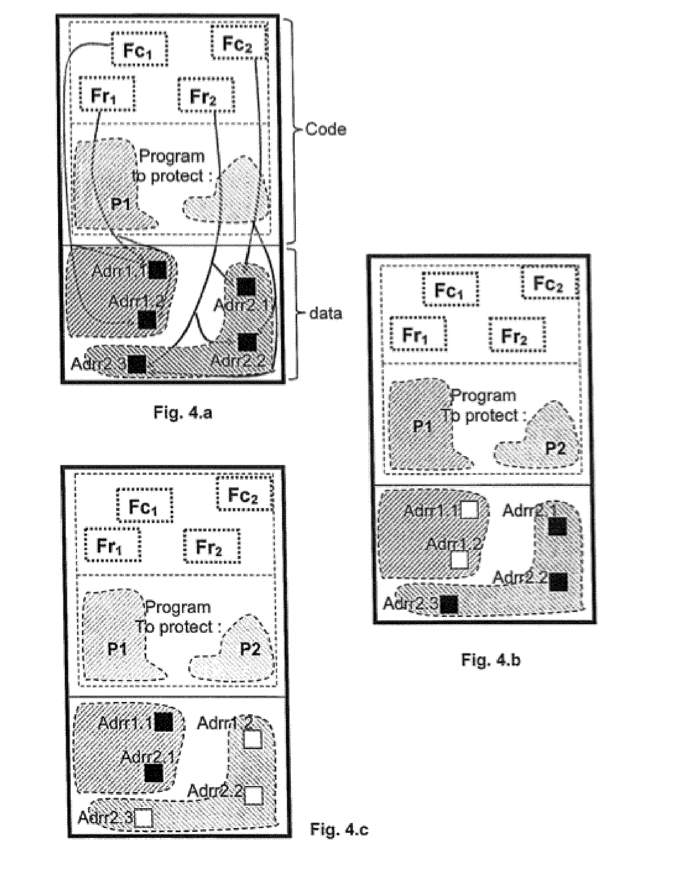

It will now be described how to choose the memory chunks to provide security to the software program. A computer program typically comprises a zone containing operating codes and another zone of constant data associated with these codes; the two zones have no common memory chunks. According to an improvement shown in **Fig. 4****.a** and **4.b,** the zone used for the calculating of the reference and current integrity values of software program is the one containing the operating codes, and the memory chunks to be protected are located in the zone of constant data associated with these codes. In this way, the integrity values cannot change before and after the corruption step, thus the current integrity value is equal to the reference integrity values. A hacker able to decode the operating codes, sees a coherent program and does not see which the corrupted memory chunks are. Indeed, the operating codes are not modified, thus the sequence of software instructions may appear logic and seems coherent. A hacker, who analyzes the suit of operating codes, cannot see obvious signs of corruption or protection. When an operating code executes wrong constant data, the behavior of software program will be slightly different, the data corrupted by protection are very difficult to detect by a hacker.

According to another embodiment, the software program is split in several parts containing memory chunks to be protected. Each part comprising operating codes and constant data associated with these operating codes is associated with a corruption routine and an integrity check routine, all the routines being stored in the protection module. When an operating code is executed in a certain part of the software program, the integrity check routine protecting this part is executed and the memory chunks of this part are first repaired. The **Fig. 4****.a** shows a mapping of the program memory 3 containing five memory chunks to be protected in the data zone, and two separate parts P1 and P2 of the program. To protect these two parts, the protection module comprises two corruption routines Fc₁ and Fc₂ to corrupt P1 and P2 respectively, and two restoration routines Fr₁ and Fr₂ to respectively restore P1 and P2. Routines Fc₁ and Fr₁ protect the addresses Addr1.1 and Addr1.2 of memory chunks, routines Fc₂ and Fr₂ protect the addresses Addr2.1, Addr2.2 and Addr2.3 of memory chunks.

**Fig. 4****.a** shows the content of program memory 3 at the time just after the execution of corruption routines Fc₁ and Fc₂, the contents of all the five addresses listed above are corrupted. When an operating code of an instruction contained in the part P1 is executed, then the protection module starts the routine restoration Fr₁ of P1 and memory chunks at addresses Addr1.1 and Addr1.2 are restored. The **Fig. 4****.b** shows the content of program memory with the repairing of memory chunks at addresses Addr1.1 and Addr1.2. The contents of the memory chunks at addressees Addr2.1, Addr2.2 and Addr2.3 are still corrupted. When the execution of software program leaves the part P1 and starts to execute instruction of P2, then the protection module starts the integrity check routine Fr₂ to restore the part P2. According to an improvement, by leaving the part P1, the module also initiates the corruption of part P1, so that a portion of program that is not performed more remains protected. This situation is illustrated by **Fig. 4****.c.**

In a given part of the software program, the management of corruption routines and integrity check routines preferably guarantees that just before running, at least a part of the software program retrieves its integrity, and between two executions of software program, this one has to be protected. To do that, the software program is corrupted just before its execution to prevent an unauthorized reading.

According to another improvement, memory chunks to be protected contain opaque predicates. These instructions are conditional jumps that refer different software program execution according to a data that has always the same value. If the data of the opaque predicates are correctly repaired, the jump is always performed in the same manner. If a hacker retrieves a corrupted software program, the data associated with such conditional jump may change, and thus, the software program may jump to an address not reachable in normal circumstances. In the same way, if the hacker changes any value of the operating code stored into the program memory 3, then the integrity value calculated in step 2.7 will be different and calculated values for repairing memory chunks to be protected will also be different from the initial values. Selecting memory chunks containing opaque predicates to be protected by the protection module can increase the performance of the present method.

According to another improvement, the memory chunks, which are selected to be protected, contain "Virtual Function Tables pointers". Corruption of this kind of data is not easy detectable and if the repairing is not perfectly performed then it is certain that the program will not run properly.

Although the present invention has been described with reference to the particular embodiments illustrated, it is in no way limited by these embodiments, but is so only by the appended claims. It will indeed be noted that any software program running in a terminal, portable or not, is protectable by the method object of the present invention.

## Claims

1. A method for protecting a software program stored in a memory comprising at least one memory chunk containing data used by operating codes of the software program, the method being performed by an electronic device (1) and comprising:
- calculating (2.2; 3.2; 2.7; 3.9) a corrupted value produced by an encryption routine using the data and a reference integrity value calculated from at least a portion of said software program not comprising said at least one memory chunk,
- replacing the content of said at least one memory chunk by the calculated corrupted value.

2. The method according to claim 1, wherein the software program comprises at least a first zone containing operating codes and a second zone containing data associated with these codes, the first zone being used for the calculating of the reference and current integrity values of software program, the second zone containing the memory chunk.

3. The method according to claim 1, wherein the data contained in memory chunk is an opaque predicate.

4. The method according to claim 1, wherein the data contained in memory chunk is at least a pointer of the virtual Function Tables pointers.

5. The method according to claim 1, wherein the encryption routine is the XOR function.

6. The method according to claim 1, wherein the reference and current integrity values are calculated by using a HASH function.

7. A method for repairing a software program stored in a memory comprising at least one memory chunk containing a data used by the operating codes of the software program, wherein at least one memory chunk of the software program contains a corrupted value, the method comprising, at an electronic device (1):
- calling an invocation point for calculating (3.5) a repaired value produced by a decryption routine using the corrupted value read from the at least one memory chunk and a current integrity value calculated over a portion of the software program not comprising the at least one memory chunk,
- repairing the software program by replacing (2.5; 3.6) the corrupted value by the calculated repaired value in the at least one memory chunk.

8. A computer program product comprising program code instructions for implementing the method according to claim 7, when the program code is executed by a processing unit.

9. A non-transitory computer-readable carrier medium storing a program that, when executed by a processing unit, performs the method according to claim 7.

10. A device (1) comprising a central unit (2) and a program memory (3), the program memory being configured to store a software program comprising at least one memory chunk containing data used by operating codes of the software program, the central unit being configured to:
- calculate a corrupted value produced by an encryption routine using the data and a reference integrity value calculated from at least a portion of the software program not comprising said at least one memory chunk, and
- replace the content of the at least one memory chunk by the calculated corrupted value.

11. A device (1) comprising a central unit (2) and a program memory (3), said program memory being configured to store a software program comprising at least one memory chunk containing data used by the operating codes of this software program, wherein the at least one memory chunk of said software program comprises a corrupted value, wherein the central unit is configured to:
- call an invocation point for calculating a repaired value produced by a decryption routine using the corrupted value read from the at least one memory chunk and a current integrity value calculated over a portion of the software program not comprising the at least one memory chunk,
- repair the software program by replacing the corrupted value by the calculated repaired value in the at least one memory chunk.

12. The device of claim 11, wherein the central unit is further configured to:
- calculate a corrupted value produced by an encryption routine using the repaired value and a reference integrity value calculated from at least a portion of the software program not comprising said at least one memory chunk, and
- replace the content of said at least one memory chunk by the calculated corrupted value.
